# EUROPEAN PATENT SPECIFICATION

(11) **EP 2 594 545 B1**
(45) Date of publication and mention of the grant of the patent: **09.09.2015**
(21) Application number: 11806494.8
(22) Date of filing: 14.07.2011
(51) Int. Cl.: C06C 7/00, B60R 21/264, B60R 22/46, C06B 27/00

(54) **IGNITING POWDER COMPOSITION FOR IGNITERS**
ZÜNDPULVERZUSAMMENSETZUNGEN FÜR ZÜNDER
COMPOSITION DE POUDRE D'ALLUMAGE POUR ALLUMEURS

(30) Priority: 15.07.2010 JP 2010160464
(43) Date of publication of application: 22.05.2013
(73) Proprietor: Nipponkayaku Kabushikikaisha, Tokyo 102-8172 (JP)
(72) Inventor: FUKUMOTO, Maiko, Himeji-shi Hyogo 679-2123 (JP); KIMURA, Ayumu, Tokyo 102-8172 (JP)
(74) Representative: Gray, James
(86) International application number: PCT/JP2011/004023
(87) International publication number: WO 2012/008161

(56) References cited:
- EP-A2- 0 763 511
- WO-A1-2005/026081
- WO-A2-99/42328
- CH-A5- 664 554
- FR-A1- 2 861 389
- JP-A- 9 118 580
- JP-A- 2002 516 250
- JP-A- 2007 518 655
- JP-A- 2009 120 424
- US-A1- 2005 011 598
- US-B1- 6 783 616

## Description

### TECHNICAL FIELD

The present invention relates to an ignition powder composition for igniter and an igniter using the ignition powder composition. In particular, the present invention relates to an ignition powder composition for igniter used in electric initiators or airbags built in automobiles, and to an igniter (so-called squib) using the ignition powder composition. In more particular, the present invention relates to an ignition powder composition for igniter meeting the required firing current sensitivity with lowered friction sensitivity and an igniter using the ignition powder composition.

### BACKGROUND ART

Various igniters have been developed as igniters provided for gas generators used in safety equipment of automobiles such as airbags or seat belt pretensioners. Such an igniter is generally charged with ignition powder which is ignited with little electrical energy, and the ignition powder works to activate the gas generator by ignition in immediate response to the thermal energy converted from the electrical energy. There are techniques using ignition powder compositions for igniter, specifically, ignition powder such as a mixture of zirconium and potassium perchlorate (ZPP); a mixture of zirconium, tungsten, and potassium perchlorate (ZWPP); and the like. Further, various ignition powders have been practically developed in order to provide for the need for improved performance of safety equipment and improved safety in the production process of igniters for gas generators.

For example, JP 2007-518655T (PTL 1) discloses a technique characterized by adding a combustion enhancer such as titanium hydride to a pyrotechnic composition which is a blend of zirconium and oxidizer. However, PTL 1 involves obtaining an ignition powder composition which is a single increment initiator charge containing zirconium as an essential ingredient, and ensures sufficient heat for ignition, and it is not aimed at lowering friction sensitivity of ignition powders.

As a method of ensuring safety in igniter production process by lowering friction sensitivity of an ignition powder composition for igniter, JP 2009-120424A (PTL 2) discloses that an ignition powder composition for igniter in which metal powder contains potassium perchlorate and potassium nitrate can be used as ignition powder with lower friction sensitivity. The invention disclosed in PTL 2 lowers friction sensitivity of a conventional ignition powder by adding potassium nitrate thereto.

For metal powder which can be used in an ignition powder composition for igniter, it is known that the firing current sensitivity is generally improved as the metal powder is refined. On the other hand, the risk of accidental ignition in handling of the metal powder during production is increased, so that safety has been an issue. It is particularly known that zirconium generally used as metal powder contained in ignition powder is excellent in ignition performance, but is at high risk of accidental ignition when being handled during production.

For such problems, JP 2001-348291A (PTL 3) discloses a technique of controlling safety risk in handling metal powder while maintaining the firing current sensitivity with the use of metal powder formed of flat metal particles. However, this technique has the disadvantages that the metal powder is required to have specially shaped particles, production control of the metal powder is difficult, and the production cost is high.

### CITATION LIST

### Patent Literature

PTL 1: JP 2007-518655T
PTL 2: JP 2009-120424A
PTL 3: JP 2001-348291A

### SUMMARY OF INVENTION

### (Technical Problem)

In order to improve safety in handling in production of an ignition powder composition for igniter, it is desired that the friction sensitivity of an ignition powder composition be lowered. However, in cases where the friction sensitivity of an ignition powder composition for igniter is lowered, the firing current sensitivity is simultaneously lowered, which has been a problem.

The purpose of the present invention is to solve the problems of existing techniques described above and to provide an ignition powder composition for igniter of which friction sensitivity is lowered with the required firing current sensitivity being achieved.

### (Solution to Problem)

As a result of various studies made to achieve the above object, the present inventor found that the friction sensitivity of an ignition powder composition for igniter can be lowered while achieving the firing current sensitivity required of ignition powder compositions for igniter, by preparing the ignition powder composition for igniter, containing metal hydride (A); metal powder (B) that is one or more selected from the group consisting of tungsten powder, molybdenum powder, aluminum powder, titanium powder, and magnesium powder; and perchlorate (C). Thus, the present invention has been completed.

The present invention is as follows (1) to (8).
(1) An ignition powder composition for igniter which contains metal hydride (A); tungsten powder (B); and perchlorate (C).
(2) The ignition powder composition for igniter according to (1), in which the metal hydride (A) contains zirconium hydride and/or titanium hydride.
(3) The ignition powder composition for igniter according to (1) or (2), in which the content of the metal hydride (A) is 10 mass% to 50 mass%.
(4) The ignition powder composition for igniter according to any one of (1) to (3), in which the content of the metal hydride (A) is 10 mass% to 50 mass%, the content of the metal powder (B) is 10 mass% to 50 mass%, and the content of the perchlorate (C) is 20 mass% to 70 mass%.
(5) An igniter using the ignition powder composition for igniter according to any one of (1) to (4).
(6) A gas generator for seat belt pretensioner, using the igniter according to (5).
(7) A gas generator for airbag, using the igniter according to (5).

### (Advantageous Effect of Invention)

The ignition powder composition for igniter according to the present invention can provide ignition powder for igniter, meeting the required firing current sensitivity with lowered friction sensitivity. Lowering friction sensitivity of ignition powder prevents accidents resulted from accidental ignition of ignition powder due to friction, which has been a problem in producing ignition powder and igniters. Safety in igniter production process can be improved, and quick response igniters can be produced. Moreover, a gas generator for seat belt pretensioner and a gas generator for airbag can be provided, which use igniters charged with such ignition powder compositions for igniter.

### BRIEF DESCRIPTION OF DRAWINGS

Fig. 1 is a cross section view showing an example of an igniter of the present invention.
Fig. 2 is a cross section view showing an example of a gas generator for seat belt pretensioner according to the present invention.
Fig. 3 is a cross section view showing an example of a gas generator for airbag according to the present invention.

### DESCRIPTION OF EMBODIMENT(S)

An ignition powder composition for igniter according to the present invention is characterized by containing metal hydride (A); tungsten powder (B); and perchlorate (C).

The ignition powder composition for igniter according to the present invention will be described in detail below.

Metal hydride (A) used in the present invention functions as a combustion component. Specifically, the metal hydride (A) works to generate heat by the oxidation in an ignition process and to provide heated metal particles and heated gas.

Examples of the metal hydride (A) used in the present invention includes zirconium hydride, titanium hydride, aluminum hydride, magnesium hydride, calcium hydride, and the like. These metal hydrides (A) may be used alone or as a mixture of two or more of the metal hydrides. In terms of the stability and handleability of the ignition powder composition, zirconium hydride and/or titanium hydride are preferable; in particular, zirconium hydride is preferable.

The particle size of the metal hydride (A) influences firing current sensitivity relating to the quick ignition response, and is determined as appropriate depending on the required performance of the igniter. The particle size used is preferably 1 µm to 10 µm.

The content of the metal hydride (A) in the ignition powder composition for igniter according to the present invention is preferably 10 mass% to 50 mass%. More preferably, the content is in the range of 10 mass% to 40 mass%. When the content of metal hydride (A) is less than 10 mass%, sufficient output may not be achieved. When the content is more than 50 mass%, the firing current sensitivity required of the ignition powder composition for igniter may not be achieved.

Metal powder (B) used in the present invention functions as a combustion component. The metal powder (B) used in the present invention is tungsten powder (B). The metal powder (B) content partly or entirely serves to generate heat in response to the oxidation in ignition and combustion processes, and to provide heated metal particles. In terms of reducing friction sensitivity of the ignition powder composition for igniter and facilitating handling in production, tungsten powder is used as the metal powder (B). Metal powder (B) in a spherical shape, formed by a known method is preferably used. The particle size of the metal powder (B) influences firing current sensitivity relating to the quick ignition response, and is determined as appropriate depending on the required performance of the igniter. The metal powder (B) used preferably has a particle size of 0.01 µm to 5 µm.

The content of the metal powder (B) used in the ignition powder composition for igniter according to the present invention is preferably in the range of 10 mass% to 50 mass% with respect to the ignition powder composition for igniter, more preferably in the range of 15 mass% to 45 mass%. When the content of the metal powder (B) is less than 10 mass%, the firing current sensitivity required of the ignition powder composition for igniter may not be achieved. In contrast, a content of more than 50 mass% may results in lower output.

Perchlorate (C) is used in the ignition powder composition for igniter according to the present invention, and the perchlorate (C) also serves as an oxidizer for oxidizing the metal hydride (A) and the metal powder (B). Examples of the perchlorate (C) include alkali metal perchlorate, alkaline earth metal perchlorate, ammonium perchlorate, and the like. Alkali metal perchlorate is preferable, and potassium perchlorate or sodium perchlorate is particularly preferable.

The content of the perchlorate (C) in the ignition powder composition for igniter is preferably 20 mass% to 70 mass%, and more preferably in the range of 25 mass% to 60 mass%. When the content of the perchlorate (C) is less than 20 mass%, sufficient output may not be achieved. If the content is more than 70 mass%, the firing current sensitivity required of the ignition powder composition for igniter may not be achieved.

The ignition powder composition for igniter of the present invention preferably has 10 mass% to 50 mass% of metal hydride (A), 10 mass% to 50 mass% of metal powder (B), and 20 mass% to 70 mass% of perchlorate (C). More preferably, the content of metal hydride (A) is in the range of 10 mass% to 40 mass%; metal powder (B): 15 mass% to 45 mass%; and perchlorate (C): 25 mass% to 60 mass%.

The ignition powder composition for igniter of present invention more preferably contains zirconium hydride and/or titanium hydride as metal hydride (A), tungsten powder as metal powder (B), and potassium perchlorate as perchlorate (C).

Specific examples of a preferred ignition powder composition include a composition containing zirconium hydride, tungsten, and potassium perchlorate. In this case, the composition preferably contains 10 mass% to 50 mass% of zirconium hydride, 10 mass% to 50 mass% of tungsten, and 20 mass% to 70 mass% of potassium perchlorate. Another preferable example may be a composition containing titanium hydride, tungsten, and potassium perchlorate. In this case, the composition preferably contains 10 mass% to 50 mass% of titanium hydride, 10 mass% to 50 mass% of tungsten, and 20 mass% to 70 mass% of potassium perchlorate.

As optional components, other metal powder, another oxidizer, a basic material, a binder, a compounding ingredient, and the like may be added as appropriate to the ignition powder composition for igniter of the present invention.

In the present invention, other metal powder may optionally be added to the metal powder (B) to be used together as a metal powder mixture. As the additional metal powders, zirconium powder, magnalium powder, copper powder, beryllium powder, and the like can be used. It should be noted that the content of the additional metal powder to be added is preferably 10 mass% or less in the ignition powder composition for igniter.

Further, the ignition powder composition for igniter of the present invention can contain other oxidizer(s) as appropriate in addition to perchlorate (C). Specific examples of the additional oxidizers include nitrates such as potassium nitrate, sodium nitrate, strontium nitrate, basic copper nitrate, magnesium nitrate, and ammonium nitrate; and chlorates such as sodium chlorate, potassium chlorate, magnesium chlorate, calcium chlorate, strontium chlorate, and ammonium chlorate. These additional oxidizers may be used alone or as a mixture of two or more of the oxidizers. In particular, an oxidizer mixture of perchlorate(s) (C) and nitrates is anticipated to balance the firing current sensitivity and lower friction sensitivity, so that it is preferably expected to improve the effect of the ignition powder composition according to the present invention. The content of the additional oxidizer is preferably 30 mass% or less in the ignition powder composition for igniter.

The ignition powder composition for igniter of the present invention preferably contains a further additional basic material as appropriate. The blending of the basic material can suppress corrosion of metal parts of the igniter. Specific examples of the basic material include metal hydroxides such as lithium hydroxide, sodium hydroxide, potassium hydroxide, rubidium hydroxide, cesium hydroxide, magnesium hydroxide, calcium hydroxide, strontium hydroxide, barium hydroxide, and aluminum hydroxide; metal oxides such as lithium oxide, sodium oxide, potassium oxide, rubidium oxide, cesium oxide, magnesium oxide, calcium oxide, strontium oxide, barium oxide, zinc oxide, thallium oxide, and cesium oxide; metal peroxides such as lithium peroxide, sodium peroxide, potassium peroxide, rubidium peroxide, cesium peroxide, magnesium peroxide, calcium peroxide, strontium peroxide, and barium peroxide; and metal carbonates such as lithium carbonate, sodium carbonate, potassium carbonate, rubidium carbonate, cesium carbonate, magnesium carbonate, calcium carbonate, strontium carbonate, and barium carbonate. These basic materials may be used alone or as a mixture of two or more of the basic materials. Further, theses basic materials may be either water-soluble or water-insoluble. Among them, metal oxides are preferable, and magnesium oxide is particularly preferable.

The content of the basic material is preferably 10 mass% or less in the ignition powder composition for igniter. Considering the relative proportions of each component in the ignition powder composition, in particular, the content is preferably 5 mass% or less.

The ignition powder composition for igniter of the present invention preferably contains a binder in addition. The blending of the binder makes it possible to improve breaking strength and various mechanical properties of the ignition powder composition for igniter to be consolidated. Specifically, organic binders such as a metal salt of carboxymethyl cellulose; polysaccharide derivatives such as hydroxyethyl cellulose, cellulose acetate, cellulose propionate, cellulose acetate butyrate, nitrocellulose, guar gum, polyvinyl alcohol, polyacrylamide, and starch; salt of stearic acid; fluoro-rubber; SBS rubber; and the like can be used. These binders may be used alone or as a mixture of two or more of the binders.

The content of the binder is preferably 5 mass% or less in the ignition powder composition for igniter.

In a method used in the present invention, the binder may be mixed to the ignition powder composition as it is, or may be mixed to the ignition powder composition with a suitable solvent added to the binder. The above solvent can be used without any particular problem as long as it is inert against the binder and excellent in dispersibility or in solubility. In addition, the solvent preferably has a property of being vaporizable in a drying process in view of the production process, and vaporizable organic solvents such as hydrocarbons, esters, or ketones are preferably used.

The ignition powder composition for igniter of the present invention can be obtained by blending various combinations of any components suitably selected depending on the necessity into the metal hydride (A), the metal powder (B), and the perchlorate (C) and mixing them, thus producing powdered ignition powder for igniter. Alternatively, the mixture of the composition components may be granulated to produce the ignition powder for igniter as granules.

In the production of the ignition powder for igniter of the present invention, the mixing may be performed by a mixing method, for example, the metal hydride (A), the metal powder (B), the perchlorate (C), and the optional components are mixed in a mixer to obtain a mixture thereof. In another alternative method, a binder dissolved in a solvent is added to a mixture in which a given component such as other metal powder is added to the mixture of the metal hydride (A) and the metal powder (B), and they are mixed in a mixer. After that, perchlorate (C), a given other oxidizer, a basic material, and the like are added to the above mixture, and they are further mixed to obtain a mixture of them.

Examples of the granulation method include a method of adding a binder component to obtain a mixture through a mixing process, air-drying the mixture on a pallet, and then passing it through a screen to obtain granules. The particle size of the granules to be obtained is determined depending on the mesh size of the screen. For the ignition powder composition for igniter of the present invention, the particle size is preferably in the range of 1.0 mm or less, more preferably in the range of 0.8 mm or less. In a case of measuring the granules in a certain volume, the particle size is preferably regular. However, when the mesh is excessively coarse, regular particle size is not achieved, whereas the mixture hardly passes through a screen having excessively fine mesh. The mesh size should be determined carefully.

As described above, ignition powder is prepared through operation processes, in which the ignition powder composition is vulnerable to mechanical contact or it is physically moved, such as measurement or transfer of each material component, in addition to the mixing process and the granulation process. Therefore, the production of ignition powder with high friction sensitivity requires careful handling. The ignition powder composition for igniter of the present invention has lower friction sensitivity, has such properties that greatly improve handling safety in the production process, and thus has significantly beneficial effects.

The ignition powder composition for igniter of the present invention can achieve lower friction sensitivity while maintaining the firing current sensitivity. The ignition powder composition has an effect of improving safety in the ignition powder preparation process. Applying the ignition powder to an igniter can ensure safety in the igniter production process while ensuring quick response of the igniter. The present invention involves an igniter using the above ignition powder composition for igniter. The igniter of the present invention is not limited in particular except that the above ignition powder composition for igniter is used. The igniter can be produced by a known method.

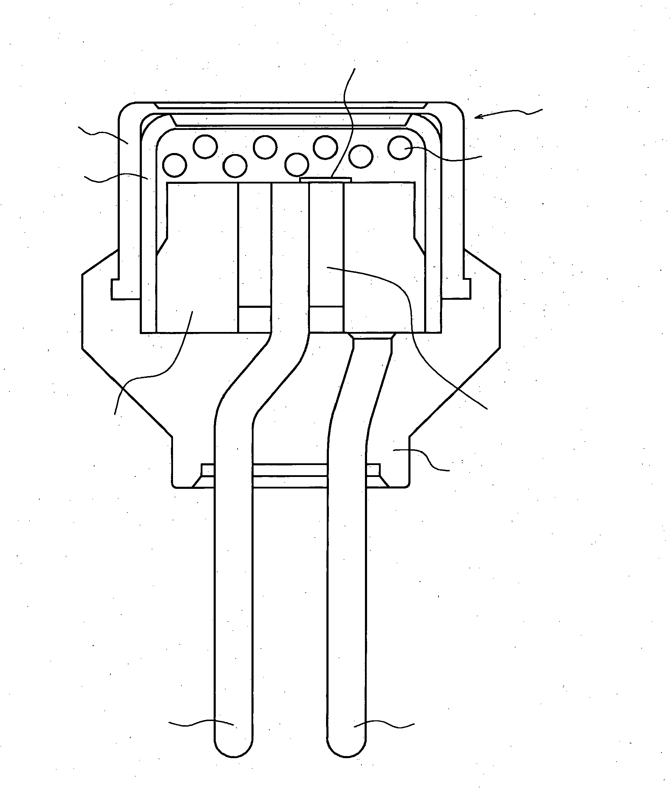

The igniter of the present invention will be described in detail below with reference to Fig. 1.

Fig. 1 is a cross section view of an example of an igniter of the present invention. An igniter 1 shown in Fig. 1 is equipped with a cup 6 for containing ignition powder 2, a cover 9 for holding a cup 6, a plug 7 in which connector pins 8 for electrical connection to the outside are fixed by insulator 4, and a bridge wire 3 connected between the connector pins 8, in contact with the ignition powder 2. The joint area between the plug 7 and the cup 6 and the joint areas between the plug 7 and the connector pins 8 are covered with an insulating resin 5 to be protected. The igniter 1 of the present invention may be further equipped with known components ordinarily used for igniters. The igniter 1 of the present invention is required to use ignition powder which is the above ignition powder composition for igniter of the present invention or consolidated powder, as the ignition powder 2.

The operation of the igniter 1 in Fig. 1 will be described. Detecting a collision of a vehicle, a sensor (not shown) sends a signal to a control unit (an energy source)(not shown), and the control unit having detected this signal supplies energy to the connector pins 8. The bridge wire 3 generates Joule heat due to electric current supplied by the energy source; the ignition powder 2 in contact with the bridge wire 3 is ignited by the heat; the cup 6 is broken by the heat energy and the generated pressure; and the flame propagates out of the igniter 1; thus, the function of an igniter is achieved. The ignition powder 2 is required to have sufficient ignition sensitivity performance to ignite in quick response to the heat generated by the bridge wire 3.

Next, a general method for producing the igniter 1 will be described.

A plug assembly, in which the plug 7 is equipped with the connector pins 8, the bridge wire 3, and the like, is installed into the cup 6 charged with the ignition powder 2 and fixed. After that, the periphery of the cup 6 is covered with the cover 9, and they are fixed with insulating resin 5 by over molding. Thus, the igniter 1 can be produced. The ignition powder 2 undergoes physical movement and mechanical contact friction through a measuring process, a loading process of loading the cup 6, a plug assembly installing process, and a plug fixing process. Thus, the igniter 1 is produced.

The ignition powder composition for igniter of the present invention has quick igniting properties while maintaining the same firing current sensitivity as existing generally used ignition powders. Further, the ignition powder composition has lowered friction sensitivity, and has such properties that significantly improve handling safety in production of the igniter. The ignition powder composition of the present invention is applied to the igniter, so that the production safety is improved and the igniter meeting the specified sensitivity performance can be provided.

The present invention includes a gas generator using the above igniter. The gas generator is preferably used as a micro gas generator used for the activation of a seat belt pretensioner. Alternatively, it is preferably used as a gas generator for deploying an airbag.

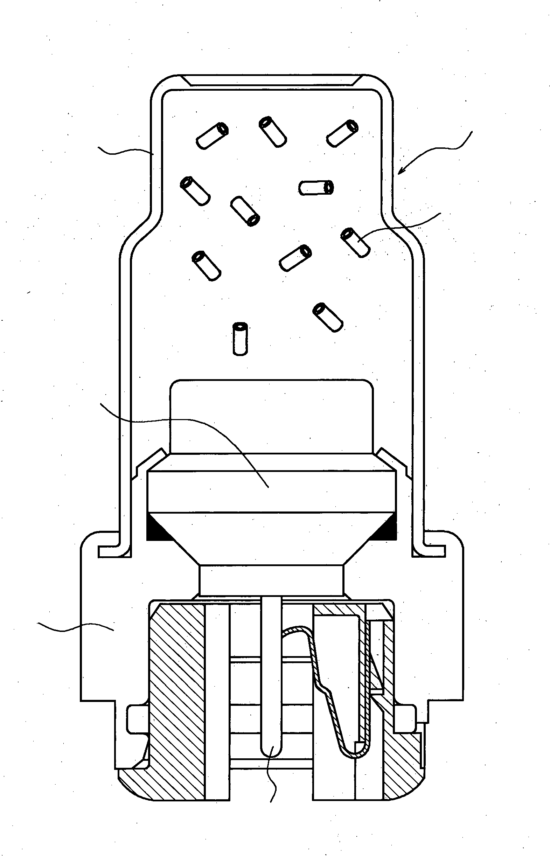

The gas generator of the present invention will be described in detail with reference to Fig. 2. Fig. 2 is a cross section view of an example of a gas generator for seat belt pretensioner using an igniter of the present invention. A gas generator 11 shown in Fig. 2 is equipped with a cup 13 for containing gas generants 12 which generates gas by combustion; an igniter 14 placed inside the cup 13, for igniting the gas generants 12 by supplied energy, which is provided with connector pins 16 for electrical connection to the outside; and a holder 15 for fixing the cup 13 and the igniter 14. The gas generator 11 may be further equipped with known components ordinarily used for gas generators.

The operations of the gas generator 11 in Fig. 2 will be described. Detecting a collision, a sensor (not shown) sends a signal to a control unit (an energy source)(not shown), and the control unit having detected this signal supplies energy to the connector pins 16. In response, a bridge wire inside the igniter 14 generates heat, and the ignition powder, with which the igniter 14 is loaded, is ignited by the generated heat, so that the flame propagates in the cup 13 of the igniter 14. The flame combusts the gas generants 12 to generate a large amount of gas. The large amount of gas generated is introduced into the seat belt pretensioner (not shown) to increase the pressure in the seat belt pretensioner; thus, the seat belt pretensioner is operated and the seat belt is fastened.

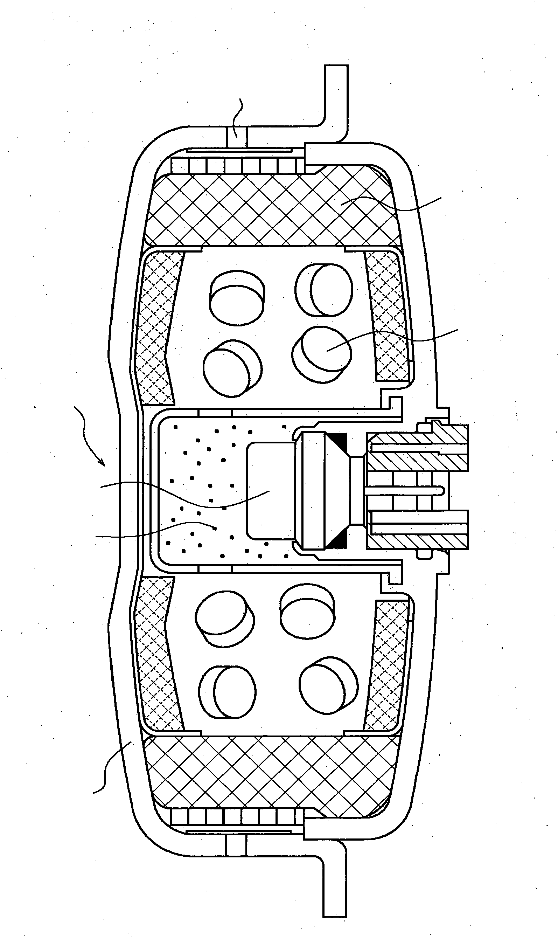

A gas generator for airbag of the present invention will be described in detail with reference to Fig. 3.

Fig. 3 is a cross section view of an example of a gas generator for airbag using an igniter of the present invention. A gas generator 21 shown in Fig. 3 has an outer envelope including a upper housing 22 which is made of a metal container provided with some gas outlets 26, and an igniter 23 of the present invention and a filter 25 are installed inside the gas generator 21. Space inside the gas generator 21 is filled with a gas generants 24, and an enhancer chamber is provided in the proximity of the igniter 23. For a normal gas generator structure, the enhancer chamber is charged with enhancer (booster charge) 27 which propagates the ignition flame generated by the igniter 23 to the gas generants 24. The gas generator 21 may be further equipped with known components ordinarily used for gas generators. Generally used known materials can be used for the enhancer 27.

Fig. 3 illustrates a so-called disk-shaped gas generator having a short cylindrical shape. However, the gas generator for deploying an airbag according to the present invention is not limited, and the igniter of the present invention can be suitably applied to a cylinder gas generator having a long cylindrical shape or a hybrid gas generator including a small amount of pyrotechnic ignition composition and a high pressure gas cylinder as well.

The operations of the gas generator 21 in Fig. 3 will be described. Detecting a collision of a vehicle, a sensor (not shown) sends a signal to a control unit (an energy source)(not shown), and the control unit having detected this signal sends energy to the igniter 23. In response, a bridge wire provided inside the igniter 23 generates heat, and the ignition powder, with which the igniter 23 is loaded, is ignited by the generated heat, so that the flame propagates in the enhancer chamber of the igniter 23. The enhancer, with which the enhancer chamber is loaded, is ignited by the flame; more intense flame and high temperature and pressure gas are passed to the gas generants 24; and the gas generants 24 are combusted and generate a large amount of gas. The large amount of generated gas passes through the filter 25, flows out through gas outlets 26 to be introduced into the airbag, and thus deploys the airbag.

### EXAMPLES

The present invention will be described in more detail by means of the following examples. It should be noted that the present invention is not limited to the following examples.

### (Example 1)

Nitrocellulose was dissolved as a binder in isoamyl acetate to prepare an isoamyl acetate solution having a binder concentration of 2 mass%. Next, 1.5 g of the isoamyl acetate solution of the above binder (binder concentration: 2 mass%) was added to a mixture of 8.55 g of zirconium hydride (particle size: 2.5 µm), 9.6 g of tungsten (particle size: 0.6 µm to 0.8 µm), 11.85 g of potassium perchlorate (particle size: 12 µm to 18 µm), and 0.15 g of magnesium oxide. Then, 11 g of isoamyl acetate was further added and mixed together in a mixer. After the mixing, the obtained mixture was spread on a palette and air-dried. After the air-drying, the mixture was passed through a 24 mesh (about 0.8 to 0.6 mm aperture) screen for granulation, and the obtained granules were introduced into a dryer to be dried at 60 °C. Thus, ignition powder for igniter (approximately 30 g) of Example 1 was obtained.

### (Examples 2 to 4)

Further, ignition powders for igniter of Examples 2 to 4 were prepared by the same preparation method as Example 1 with the component ratios of the components being altered as shown in Table 1.

### (Comparative Example)

Nitrocellulose was dissolved as a binder in isoamyl acetate to prepare an isoamyl acetate solution having a binder concentration of 1.3 mass%. Next, 45 g of the above isoamyl acetate solution (binder concentration: 1.3 mass%) was added to a mixture of 150 g of zirconium (particle size: 2 µm) and 175 g of tungsten (particle size: 0.6 µm to 0.8 µm), and after that, 50 g of isoamyl acetate was further added and mixed together in a mixer. Then, 175 g of potassium perchlorate, 2.5 g of magnesium oxide, and 60 g of isoamyl acetate were added and mixed in the mixer. After the mixing, the obtained mixture were spread on a palette and air-dried. After the air-drying, the mixture was passed through a 24 mesh screen for granulation, and the obtained granules were introduced into a dryer to be dried at 60 °C. Thus, ignition powder for igniter (approximately 500 g) was obtained.

The compositions of the ignition powders for igniter of Examples 1 to 4 and Comparative Example are shown in Table 1. The contents are each expressed in mass ratio in reference to the whole composition.

**[Table 1]**

| (Unit: mass ratio) | Example 1 | Example 2 | Example 3 | Example 4 | Comparative Example |
|---|---|---|---|---|---|
| Zirconium hydride | 28.5 | 30 | 40 | 20 | - |
| Zirconium | - | - | - | - | 30 |
| Tungsten | 32.0 | 35 | 20 | 40 | 35 |
| Potassium perchlorate | 39.5 | 35 | 40 | 40 | 35 |
| Magnesium oxide | 0.5 | 0.5 | 0.5 | 0.5 | 0.5 |
| Binder | 0.1 | 0.1 | 0.1 | 0.1 | 0.1 |

The friction sensitivity test and the firing current sensitivity test were performed on each of the ignition powders for igniter obtained in accordance with Examples 1 to 4 and Comparative Example by the following method. Table 2 shows the results.

### (1) Friction sensitivity test (test method based on JIS K 4810)

The ignition powder of Examples or Comparative Example was held between a ceramic friction peg and a ceramic friction plate attached to the BAM friction tester, and the friction plate was moved horizontally with a load being applied thereto. Thus, a friction sensitivity test was performed. The friction sensitivity level was examined from the relationship between the applied load and whether explosion occurred or not. The level was evaluated by determining the load of the 1/6 explosion point with which explosion occurs once or was assumed to occur once in six times of continuous tests with the same load being applied.

### (2) Firing current sensitivity test

The firing current sensitivity was evaluated by the Bruceton test process used as a statistical method for calculating the minimum firing current and the maximum non-firing current. In brief, the igniter shown in Fig. 1 was loaded with 215 mg of the ignition powders of Examples 1 to 4 and Comparative Example to manufacture test igniters. For the test igniter, some equally spaced levels were determined with respect to the firing current, and the firing current was supplied depending on whether the test device was fired by the firing current or not. This test procedure was repeated 40 times, and the results were finally processed statically to find the mean value and estimate the standard deviation of the minimum firing current and maximum non-firing current. Thus, the minimum firing current and maximum non-firing current meeting the desired reliability were determined. The confidence level was 95%, and the reliability was 99.9999%, with respect to the minimum firing current and the maximum non-firing current.

**[Table 2]**

| | Friction sensitivity | Firing current sensitivity | |
|---|---|---|---|
| | Load of 1/6 explosion point [gf] | Minimum firing current [A] | Maximum non-firing current [A] |
| Example 1 | 8000 | 1.20 | 0.53 |
| Example 2 | 5600 | 0.93 | 0.47 |
| Example 3 | 8000 | 1.02 | 0.52 |
| Example 4 | 10800 | 0.92 | 0.40 |
| Comparative Example | 50 to 75 | 1.12 | 0.42 |

In the friction sensitivity test, the load of the 1/6 explosion point for each ignition powder of Examples 1 to 4 was found to be 5600 gf to 10800 gf. On the other hand, for Comparative Example using conventional ignition powder, explosion occurred twice with a load of 75 gf, and no explosion occurred with a load of 50 gf. Therefore, the load corresponding to the 1/6 explosion point was determined to be a load between 50 gf and 75 gf. The results of the friction sensitivity test showed that the load of 1/6 explosion points with the ignition powder compositions for igniter of Examples 1 to 4 was heavier than the ignition powder composition for igniter of Comparative Example. It was found that the friction sensitivities of the ignition powder compositions for igniter of Examples 1 to 4 were significantly lowered and accordingly they became less sensitive.

On the other hand, in terms of the firing current sensitivity, the minimum firing current and maximum non-firing current of ignition powders of Examples 1 to 4 were almost the same as those of the conventional ignition powder used in Comparative Example. Examples 1 to 4 had no trouble in using the ignition powders for igniter; they were found to meet the required firing current sensitivity.

### (Example 5)

Ignition powder for igniter of Example 5 was prepared by the same preparation method as Example 1 (1.5 g of an isoamyl acetate solution (binder concentration: 2 mass%) containing nitrocellulose as a binder was added to 0.15 g of magnesium oxide), except for using the composition containing 6.3 g of titanium hydride (particle size: 8.0 µm), 9.6 g of tungsten (particle size: 0.6 µm to 0.8 µm), and 14.1 g of potassium perchlorate (particle size: 12 µm to 18 µm).

### (Example 6)

In a mixer, 2.782 g of titanium hydride (particle size: 8.0 µm), 6.572 g of tungsten (particle size: 0.6 µm to 0.8 µm), 10.646 g of potassium perchlorate (particle size: 12 µm to 18 µm), and 7 g of isoamyl acetate were mixed together. After the mixing, the obtained mixture was spread on a palette and air-dried. After the air-drying, the mixture was passed through a 24 mesh (about 0.8 mm to 0.6 mm aperture) screen for granulation, and the obtained granules were introduced into a dryer to be dried at 60 °C. Thus, ignition powder for igniter (approximately 20 g) of Example 6 was obtained.

The compositions of the ignition powders for igniter of Examples 5 and 6 are shown in Table 3. The contents are each expressed in mass ratio in reference to the whole composition.

**[Table 3]**

| | Example 5 | Example 6 |
|---|---|---|
| Titanium hydride | 21 | 13.9 |
| Tungsten | 32 | 32.9 |
| Potassium perchlorate | 47 | 53.2 |
| Magnesium oxide | 0.5 | - |
| Binder | 0.1 | - |

The friction sensitivity test based on JIS K 4810 was performed on the ignition powders for igniter of Examples 5 and 6. Further, in order to confirm whether the ignition powders had an ignition function or not, the function test was carried out under the following test conditions. Table 4 shows the results.

### (3) Function test

The igniters shown in Fig. 1 were loaded with 215 mg of the ignition powders for igniter of Examples 5 and 6 as the ignition powder 2 and test igniters were manufactured. A current of 1.2 A was supplied to the connector pins 8 for 2 ms to determine whether ignition occurred or not.

**[Table 4]**

| | Friction sensitivity; load of 1/6 explosion point (gf) | Function test |
|---|---|---|
| Example 5 | 10800 | Ignition |
| Example 6 | 19200 | Ignition |

The ignition powders of Examples 5 and 6 were found to be significantly less sensitive for friction from the load of 1/6 explosion point found in the friction sensitivity test. The ignition powders of Examples 5 and 6 were found to ignite by the method for checking activation of igniters under the conditions of supplying a current 1.2 A for 2 ms. Accordingly, it was determined that the ignition powders of Examples 5 and 6 can be used as the ignition powder compositions for igniter without any problem.

The ignition powder compositions for igniter of the present invention were demonstrated to achieve the performance of lower friction sensitivity, meeting the required firing current sensitivity. The ignition powder having sensitivity that ensures ignition with very low current is obtained, and the ignition powder becomes less sensitive with lower friction sensitivity, which is significantly beneficial in improving safety in the production process.

### REFERENCE SIGNS LIST

- 1, 14, 23:: Igniter
- 2:: Ignition powder
- 3:: Bridge wire
- 4:: Insulator
- 5:: Insulating resin
- 6, 13:: Cup
- 7:: Plug
- 8, 16:: Connector pins
- 9:: Cover
- 11, 21:: Gas generator
- 12, 24:: Gas generants
- 15:: Holder
- 22:: Upper housing
- 25:: Filter
- 26:: Gas outlets
- 27:: Enhancer

## Claims

1. An ignition powder composition for an igniter (1,14,23), comprising:
metal hydride (A);
tungsten powder (B); and
perchlorate (C).

2. The ignition powder composition for an igniter (1,14,23) according to Claim 1, wherein the metal hydride (A) contains zirconium hydride and/or titanium hydride.

3. The ignition powder composition for an igniter according to Claim 1 or Claim 2, wherein the content of the metal hydride (A) is 10 mass% to 50 mass%.

4. The ignition powder composition for an igniter (1,14,23) according to any one of Claims 1 to 3, wherein
the content of the metal hydride (A) is 10 mass% to 50 mass%,
the content of the metal powder (B) is 10 mass% to 50 mass%, and
the content of the perchlorate (C) is 20 mass% to 70 mass%.

5. An igniter (1,14,23) using the ignition powder composition for an igniter (1,14,23) according to any one of Claims 1 to 4.

6. A gas generator (11) for seat belt pretensioner, using the igniter (14) according to Claim 5.

7. A gas generator (21) for airbag, using the igniter (23) according to Claim 5.

## Patentansprüche

1. Zündpulverzusammensetzung für einen Zünder (1, 14, 23), umfassend:
Metallhydrid (A);
Wolframpulver (B); und
Perchlorat (C).

2. Zündpulverzusammensetzung für einen Zünder (1, 14, 23) gemäß Anspruch 1, wobei das Metallhydrid (A) Zirkoniumhydrid und/oder Titaniumhydrid enthält.

3. Zündpulverzusammensetzung für einen Zünder gemäß Anspruch 1 oder 2, wobei der Anteil des Metallhydrids (A) 10 Masseprozent bis 50 Masseprozent beträgt.

4. Zündpulverzusammensetzung für einen Zünder (1, 14, 23) gemäß einem
der Ansprüche 1 bis 3, wobei
der Anteil des Metallhydrids (A) 10 Masseprozent bis 50 Masseprozent,
der Anteil des Metallpulvers (B) 10 Masseprozent bis 50 Masseprozent und der Anteil des Perchlorats (C) 20 Masseprozent bis 70 Masseprozent beträgt.

5. Zünder (1, 14, 23), in dem eine Zündpulverzusammensetzung für einen Zünder (1, 14, 23) gemäß einem der Ansprüche 1 bis 4 verwendet wird.

6. Gasgenerator (11) für einen Sitzgurtvorspanner, bei dem der Zünder (14) gemäß Anspruch 5 verwendet wird.

7. Gasgenerator (21) für einen Airbag, bei dem der Zünder (23) gemäß Anspruch 5 verwendet wird.

## Revendications

1. Composition de poudre d'allumage pour un allumeur (1, 14, 23), comprenant :
un hydrure de métal (A) ;
de la poudre de tungstène (B) ; et
du perchlorate (C).

2. Composition de poudre d'allumage pour un allumeur (1, 14, 23) selon la revendication 1, dans laquelle l'hydrure de métal (A) contient de l'hydrure de zirconium et/ou de l'hydrure de titane.

3. Composition de poudre d'allumage pour un allumeur selon la revendication 1 ou la revendication 2, dans laquelle la teneur en hydrure de métal (A) est de 10 % en masse à 50 % en masse.

4. Composition de poudre d'allumage pour un allumeur (1, 14, 23) selon l'une quelconque des revendications 1 à 3, dans laquelle
la teneur en hydrure de métal (A) est de 10 % en masse à 50 % en masse,
la teneur en poudre de métal (B) est de 10 % en masse à 50 % en masse, et
la teneur en perchlorate (C) est de 20 % en masse à 70 % en masse.

5. Allumeur (1, 14, 23) utilisant la composition de poudre d'allumage pour un allumeur (1, 14, 23) selon l'une quelconque des revendications 1 à 4.

6. Générateur de gaz (11) pour prétensionneur de ceinture de sécurité, utilisant l'allumeur (14) selon la revendication 5.

7. Générateur de gaz (21) pour airbag, utilisant l'allumeur (23) selon la revendication 5.
